# FASCICULE DE BREVET EUROPEEN

(11) **EP 1 814 931 B1**
(45) Date de publication et mention de la délivrance du brevet: **29.05.2013**
(21) Numéro de dépôt: 05817256.0
(22) Date de dépôt: 10.11.2005
(51) Int. Cl.: C08J 3/14, C08G 69/44, C08K 3/36, C08G 69/20

(54) **Procédé d'obtention de particules de polyamide ou de copolyesteramide**
Verfahren zur Gewinnung von Polyamid- oder Copolyesteramidteilchen
Process for obtaining polyamide or copolyesteramide particles

(30) Priorité: 12.11.2004 FR 0412029
(43) Date de publication de la demande: 08.08.2007
(73) Titulaire: ARKEMA FRANCE, 92700 Colombes (FR)
(72) Inventeur: OUVRARD, Thierry, F-64230 Poey de Lescar (FR); SENNINGER, Thierry, F-75008 Paris (FR); LOYEN, Karine, F-27500 Pont-Audemer (FR); SENFF, Holger, F-27470 Serquigny (FR)
(74) Mandataire: Lhoste, Catherine
(86) Numéro de dépôt international: PCT/FR2005/002810
(87) Numéro de publication internationale: WO 2006/051222

(56) Documents cités:
- EP-A- 0 192 515
- EP-A- 0 303 530
- EP-A- 1 172 396
- EP-A- 1 571 173
- EP-A1- 0 875 538
- FR-A- 2 060 913

## Description

### DOMAINE DE L'INVENTION

La présente invention concerne le domaine des résines polyamides en poudre dont le diamètre moyen est compris entre 40 µm et 150 µm, de préférence entre 60 et 100 µm dont la distribution granulométrique est étroite et plus particulièrement celles se présentant sous forme de particules sphéroïdales, c'est à dire des particules en forme de sphéroïdes, une sphéroïde étant un solide à peu près sphérique.

Les poudres de polyamide et notamment celles se présentant sous forme de particules sphéroïdales sont utilisées pour le revêtement de substrats, notamment métalliques (coil-coating), dans des compositions d'encres et de peintures, solides ou liquides, ainsi que dans des formulations cosmétique e/ou pharmaceutique. Comme pour toutes résines polyamides, ces poudres présentent une grande résistance chimique vis-à-vis de nombreux produits, notamment des composés organiques tels que des aldéhydes, des cétones, des esters, des graisses, des hydrocarbures et d'excellentes propriétés mécaniques (résistance au frottement, aux chocs, à l'abrasion).

Un procédé pour synthétiser des poudres de polyamide 12 parfaitement sphériques consiste à dissoudre le lauryl lactame à 140 °C dans une paraffine liquide contenant du stéarate de potassium puis à amorcer la polymérisation en ajoutant du lactamate de potassium et du trichlorure de phosphore (J61-233.019 et J72-024.960). Cette méthode se transpose à la synthèse de poudres parfaitement sphériques de copolyamides obtenus à partir de lauryl lactame et d'un ou plusieurs autres lactames tels que le caprolactame (**J72-025.157**). Les poudres obtenues par ce procédé n'ont quasiment pas de porosités.

On sait obtenir industriellement des particules de polyamide poreuses, notamment sphéroïdales, de distribution granulométrique resserrée par polymérisation anionique de lactame(s) en suspension (FR1213993**,** FR1602751) ou en solution (DE1183680) dans un liquide organique. Les procédés décrits dans ces brevets permettent d'obtenir directement des particules de polyamide qui se séparent d'elles-mêmes du milieu liquide au fur et à mesure de leur formation. Les solvants organiques mis en oeuvre pour la polymérisation anionique sont en général choisis parmi des hydrocarbures aliphatiques et/ou aromatiques, seuls ou en mélange (par exemple coupes d'hydrocarbures), leur plage d'ébullition se situant en général entre 140 et 170 °C. Le lactame ou le mélange de lactames est initialement entièrement dissous dans le solvant ou le mélange de solvants en présence d'autres ingrédients tels que par exemple une charge minérale ou organique. Comme cela est enseigné dans les brevets FR1213993**,** FR1521130 **et** EP192515**,** le diamètre moyen des particules est réglé à l'aide des paramètres de procédé que sont la vitesse d'agitation, l'addition dosée en portions successives des réactifs ou la masse de charge introduite. Comme enseigné dans les brevets EP303530 et EP192515**,** la charge qui est ajoutée joue le rôle de germes de cristallisation.

Pour certaines applications, comme par exemple pour le coil-coating, il est nécessaire d'obtenir des particules de polyamide ou de copolyesteramide ayant un diamètre moyen supérieur à 40 µm, voire supérieure à 60 µm. Nous avons testé des charges finement divisées génératrices de germes cristallins (ex : silice pyrogénée), dans les conditions de EP192515 en diminuant la vitesse d'agitation et/ou en réduisant la quantité de germes introduite. Mais, ces actions ne permettent pas d'obtenir de façon reproductible des particules de diamètre supérieur à 40 µm et il s'avère pratiquement impossible d'obtenir des particules de diamètre supérieur à 60 µm. Dans ce cas, la vitesse d'agitation ne peut pas être diminuée trop fortement car il est nécessaire d'assurer malgré tout une homogénéïté du milieu réactionnel. La réduction de la quantité de charge ne permet pas non plus d'augmenter le diamètre car les impuretés, jouant certainement le rôle de germes perturbateurs, peuvent être présentes en trop grande quantité dans le milieu réactionnel.

La Demanderesse a constaté que pour résoudre ce problème technique et obtenir des particules de polyamide ou copolyesteramide de distribution granulométrique resserrée et de diamètre moyen compris entre 40 et 150 µm, de préférence entre 60 et 100 µm, il faut introduire dans le milieu de polymérisation une une silice choisie parmi les silices fabriquées suivant un procédé de précipitation et de diamètre moyen compris entre 1 et 30 µm, de préférence compris entre 2 et 20 µm, avantageusement entre 3 et 11 µm et encore plus avantageusment entre 4 et 8 µm.

Ainsi, l'introduction de ladite silice permet de réduire l'effet des impuretés qui seraient présentes dans le milieu réactionnel et permet d'éviter de réduire trop fortement la vitesse d'agitation. Ce type de charge minérale apporte donc l'assurance d'obtenir des particules de polyamide ou de copolyesteramide de diamètre moyen supérieur à 40 µm, de préférence supérieur à 60 µm.

Dans le brevet EP192515**,** il est décrit un procédé d'obtention de particules de polyamide par une polymérisation anionique de lactame(s) en solution en présence d'une charge organique ou minérale finement divisée. La charge peut être de la silice finement divisée et déshydratée.

Dans le brevet EP303530**,** il est décrit un procédé d'obtention de particules de polyamide de diamètre moyen compris entre 1. et 20 µm par une polymérisation anionique de lactame(s) dans un solvant dans lequel le(s) lactame(s) est en état de sursaturation. Il est possible d'introduire dans le milieu réactionnel des germes de cristallisation qui se présentent sous forme de charge finement divisée qui peut être de la silice ou du talc.

Dans le brevet FR1601195**,** la polymérisation du lactame en solution est conduite en présence d'une poudre de polyamide déjà formée.

Dans le brevet FR1213993**,** la polymérisation du lactame en solution est conduite sans agglomération du polyamide sur les parois du réacteur en présence de poudre de polyamide déjà formée. Des pigments tels que du noir de carbone ou du dioxyde de titane peuvent aussi être ajoutés initialement.

Dans tous ces brevets, la charge qui est introduite dans le milieu de polymérisation est constituée de particules minérales finement divisées ou de poudre de polyamide.

Dans le brevet EP1172396**,** il est décrit un procédé d'obtention de particules de copolyesteramides par copolymérisation de deux lactames et d'une lactone en présence d'une charge minérale ou organique finement divisée dont le diamètre moyen est compris entre 0,01 et 10 µm.

Dans aucun de ces documents, il n'est décrit que l'utilisation d'une silice fabriquée suivant un procédé de précipitation et de diamètre moyen compris entre 1 et 30 µm permet d'obtenir des particules de polyamide ou de copolyesteramide de diamètre moyen compris entre 40 et 150 µm.

L'invention est relative à un procédé d'obtention de particules de poudre de polyamide ou de copolyesteramide de diamètre moyen compris entre 40 et 150 µm, de préférence entre 60 et 100 µm, par polymérisation anionique d'au moins un monomère polymérisable consistant à introduire dans le milieu réactionnel une silice fabriquée suivant un procédé de précipitation de diamètre moyen compris entre 1 et 30 µm.

Selon un mode de réalisation, les particules de polyamide ou de copolyesteramide ont un diamètre moyen compris entre 60 et 100 µm.

Les particules de polyamide ou de copolyesteramide ont une forme sphéroïdale.

Selon un mode de réalisation, le diamètre moyen de la silice est compris entre 2 et 20 µm.

Selon un mode de réalisation, le diamètre moyen de la silice est compris entre 3 à 11 µm.

Selon un mode de réalisation, le diamètre moyen de la silice est compris entre 4 à 8 µm.

Selon un mode de réalisation, la silice est choisie parmi les silices vendues sous la dénomination commerciale SIPERNAT® 320 DS ou SIPERNAT® 50 S de la société Degussa ou parmi les silices vendues sous la dénomination commerciale Syloid®807, Syloid®ED2 et Syloid® ED5 de la société Grace .

Selon un mode de réalisation, le rapport pondéral de la charge minérale par rapport au(x) monomère(s) polymérisable (s) est compris entre 10 et 50 000 ppm, de préférence entre 100 et 20 000 ppm, et avantageusement entre 100 et 15 000 ppm.

Selon un mode de réalisation, le ou les monomères polymérisable(s) est ou sont choisis parmi le lauryl lactame, le caprolactame, l'oenantholactame et le capryllactame.

Selon un mode de réalisation, les particules de polyamide sont en polyamide 12, en polyamide 6 ou en polyamide 6/12.

Selon un mode de réalisation, on polymérise un mélange de monomères comprenant en % molaire, le total faisant 100% :
- de 1 à 98% d'un lactame choisi parmi le lauryl lactame, le caprolactame, l'oenantholactame et le capryllactame ;
- de 1 à 98% d'un lactame différent du précédent choisi parmi le lauryl lactame, le caprolactame, l'oenantholactame et le capryllactame ;
- de 1 à 98% d'une lactone choisi parmi la caprolactone, la valérolactone et la butyrolactone.

Selon un mode de réalisation, on ajoute au milieu réactionnel au moins une N,N'-alkylène bis amide.

Selon un mode de réalisation, on utilise comme solvant, une coupe d'hydrocarbures paraffiniques dont la plage d'ébullition est comprise entre 120 et 170°C, de préférence entre 140 et 170°C.

L'invention est également relative à une poudre de polyamide ou à une poudre de copolyesteramide susceptibles d'être obtenues selon le procédé décrit ci-dessus.

L'invention a aussi trait à l'utilisation d'une poudre définie précédemment pour fabriquer: des revêtements, des compositions d'encre, des compositions de peintures, des compositions cosmétiques, des compositions pharmaceutiques, des alliages avec des poudres métalliques, des alliages avec des poudres d'oxydes métalliques ou des articles par agglomération de la dite poudre par fusion provoquée par un faisceau laser (laser sintering), un rayonnement IR ou un rayonnement UV.

Selon un mode de réalisation, on utilise une poudre telle que définie précédemment pour fabriquer un revêtement de substrat métallique, tel qu'un revêtement de tôle d'acier ou d'aluminium, ou un revêtement de substrat plastique.

Selon un mode de réalisation, on utilise une poudre telle que définie précédemment pour fabriquer un plasto-aimant.

Nous allons maintenant décrire plus en détails l'invention.

### LA CHARGE MINERALE

Les silices précipitées vendues sous les dénominations commerciales SIPERNAT® 320 DS, SIPERNAT® 50 S et Syloid® ED5 sont tout particulièrement préférées, mais ne sont pas limitatives.

### LE OU LES MONOMERE(S) POLYMERISABLE(S)

Le ou les monomère(s) polymérisable(s) utilisé(s) dans l'invention est ou sontchoisi(s) parmi les lactames tels que par exemple le lauryl lactame, le caprolactame, l'oenantholactame, le capryllactame ou leurs mélanges. De préférence, on utilise le lauryl lactame seul, le caprolactame seul ou leur mélange.

Il est également possible d'envisager la copolymérisation de plusieurs lactames avec une lactone conduisant à un copolyesteramide comme décrit dans le brevet EP1172396**.** Dans ce cas, on copolymérise un mélange comprenant en % molaire, le total étant à 100% :
➢ de 1 à 98% d'un lactame choisi parmi le lauryl lactame, le caprolactame, l'oenantholactame et le capryllactame ;
➢ de 1 à 98% d'un lactame différent du premier choisi parmi le lauryl lactame, le caprolactame, l'oenantholactame et le capryllactame ;
➢ de 1 à 98% d'une lactone choisi parmi la caprolactone, la valérolactone et la butyrolactone.

Dans le cas d'un copolyesteramide, avantageusement, on utilise le caprolactame, le lauryllactame et le caprolactone dans les proportions (% molaire) respectives suivantes : 30-46%, 30-46% et 8-40% (le total étant à 100%).

De préférence, le procédé s'applique aux lactames et à leurs mélanges plutôt qu'aux mélanges de plusieurs lactames et d'une lactone.

### LA POLYMERISATION

S'agissant de la polymérisation anionique qui est mise en oeuvre pour l'obtention des particules de polyamide ou de copolyesteramide, celle-ci est conduite dans un solvant.

### • Le Solvant

Le solvant utilisé dissout le ou les monomère(s) mais pas les particules de polymère qui se forment pendant la polymérisation. Des exemples de solvant sont donnés dans la brevet EP192515. Avantageusement, le solvant est une coupe d'hydrocarbures paraffiniques dont la plage d'ébullition est comprise entre 120 et 170°C, de préférence entre 140 et 170°C.

Le solvant peut être sursaturé en monomère(s) à la température d'initiation, c'est-à-dire à la température à laquelle débute la polymérisation. Différents moyens permettent de sursaturer le solvant en monomère(s). Un de ces moyens peut consister à saturer le solvant en monomère(s) à une température supérieure à celle d'initiation, puis à abaisser la température jusqu'à la température d'initiation. Un autre moyen peut consister à sensiblement saturer le solvant en monomère(s) à la température d'initiation, puis à ajouter, toujours à la cette température, un amide primaire contenant de préférence de 12 à 22 atomes de carbone, comme par exemple l'oléamide, le N-stéaramide, l'érucamide, l'isostéaramide ou bien un N,N'-alkylène bis amide dont des exemples sont donnés plus loin.

Il est également possible de mettre en oeuvre la polymérisation dans un solvant non sursaturé en monomère(s). Dans ce cas, le milieu réactionnel contient le ou les monomère(s) dissous dans le solvant à une concentration éloignée de la sursaturation à la température d'initiation. De préférence, la polymérisation est mise en oeuvre selon l'invention dans un solvant non sursaturé en monomère(s).

### • Le Catalyseur

Un catalyseur choisi parmi les catalyseurs usuels de la polymérisation anionique des lactames est utilisé. Il s'agit d'une base suffisamment forte pour conduire à un lactamate après réaction avec le lactame ou le mélange de lactames. Une combinaison de plusieurs catalyseurs est envisageable. A titre d'exemples non limitatifs, on peut citer l'hydrure de sodium, l'hydrure de potassium, le sodium, le méthylate et/ou l'éthylate de sodium. La quantité de catalyseur(s) introduite peut en général varier entre 0,5 et 3 moles pour 100 moles de monomère(s).

### • L'Activateur

On ajoute également un activateur dont le rôle est de provoquer et/ou accélérer la polymérisation. L'activateur est choisi parmi les lactames-N-carboxyanilides, les (mono)isocyanates, les polyisocyanates, les carbodiimides, les cyanamides, les acyllactames et acylcarbamates, les triazines, les urées, les imides N-substituées, les esters et le trichlorure de phosphore. Il peut éventuellement aussi s'agir d'un mélange de plusieurs activateurs. L'activateur peut aussi éventuellement être formé *in situ*, par exemple, par réaction d'un isocyanate d'alkyle avec le lactame pour donner un acyllactame.

Le rapport molaire catalyseur/activateur est compris entre 0,2 et 2, de préférence entre 0,8 et 1,2.

### • Les Charges ou Additifs

On peut également ajouter dans le milieu réactionnel tout type de charges (pigments, colorants) ou additifs (antioxydants, anti-UV, plastifiants,...) à condition que tous ces composés soient bien secs et inertes vis-à-vis du milieu réactionnel.

On peut également ajouter de manière avantageuse au moins une N,N'-alkylène bis amide comme indiqué dans EP192515**,** la quantité de N,N'-alkylène bis amide(s) introduite étant en général de l'ordre de 0,001 à 4 moles pour 100 moles de monomère(s). Parmi les N,N'-alkylène bis amides particulièrement recommandées, on peut citer les N,N'-alkylène bis amides d'acides gras et mieux encore :
➢ la N,N'-Ethylène bis-stéaramide de formule C₁₇H₃₅-C(=O)-NH-CH₂CH₂-NH-C(=O)-C₁₇H₃₅.
➢ N,N'-Ethylène bis-oléamide de formule C₁₇H₃₃-C(=O)-NH-CH₂CH₂-NH-C(=O)-C₁₇H₃₃.
> les N,N'-alkylène bispalmitamide, gadoléamide, cétoléamide, érucamide.

### • Le Procédé

La polymérisation anionique est conduite en continu ou bien de préférence, en discontinu (batch). En discontinu, on introduit le solvant, puis simultanément ou successivement le ou les monomère(s), éventuellement une N,N'-alkylène bis amide, la charge minérale, le catalyseur et l'activateur. Il est recommandé d'introduire d'abord le solvant et le ou les monomère(s) puis d'éliminer toute trace d'eau, par exemple à l'aide d'une distillation azéotropique, puis d'ajouter le catalyseur une fois le milieu anhydre. La charge minérale peut être introduite par exemple après l'introduction du ou des monomère(s). Il peut être avantageux pour éviter la prise en masse ou la perte de contrôle de la polymérisation d'introduire l'activateur non pas en une seule fois mais par incréments ou bien à une vitesse d'introduction donnée.

On opère à la pression atmosphérique ou bien sous une pression légèrement supérieure (pression partielle du solvant chaud) et à une température comprise entre 20°C et la température d'ébullition du solvant. La température d'initiation et de polymérisation des lactames est en général comprise entre 70 et 150 °C, de préférence entre 80 et 130°C.

Le rapport pondéral de la charge minérale par rapport à le ou les monomère(s) introduit(s) est en général compris entre 10 et 50 000 ppm, de préférence entre 100 et 40 000 ppm, encore plus préférentiellement entre 100 et 20 000 ppm, avantageusement entre 100 et 15 000 ppm et très avantageusement entre 100 et 10 000 ppm.

Les particules de poudre de polyamide ou copolyesteramide selon l'invention présentent en plus l'avantage d'être poreuses, ce qui permet d'obtenir une capacité d'absorption particulièrement intéressante par exemple dans des formulations cosmétiques et/ou pharmaceutiques ou dans des peintures.

Les poudres de polyamide ou copolyesteramide selon l'invention et notamment celles dont les particules sont de forme sphéroïdale peuvent avantageusement être utilisées pour des revêtements de substrats, notamment dans des compositions d'encres et peintures solides ou liquides ainsi que dans des formulations cosmétiques et/ou pharmaceutiques. Pour le revêtement de substrats, plus particulièrement de substrats métalliques, elles sont particulièrement recommandées dans des procédés de type coil coating ( revêtement en ligne de tôle d'acier ou d'aluminium).

Elles peuvent aussi être utilisées en additif dans les revêtements de récipients métalliques (par ex canettes) ou en aluminium (boîtes de conserve) désignés par le nom générique de can-coating.

Elles peuvent aussi être utilisées en additifs dans les revêtements pour substrats plastiques par procédé UV-réticulable afin de donner un effet grainé ou texturé à la surface du substrat.

Elles peuvent également avantageusement être utilisées comme liants pour l'agglomération de poudres métalliques ou de poudres d'oxydes métalliques. Dans ce dernier cas, les pièces obtenues sont appelées plasto-aimants et sont utilisées dans les moteurs électriques miniatures.

Ces poudres peuvent également être utilisées dans le cadre du procédé de fabrication d'objets par fusion provoquée par un faisceau laser (laser sintering), un rayonnement IR ou un rayonnement UV. La technique du laser sintering est décrite dans la demande de brevet EP1571173 de la demanderesse.

Les poudres de copolyesteramide selon l'invention possèdent une température de fusion comprise entre 80 et 220°C. Elles peuvent être utilisées notamment dans les papiers transferts ou bien dans des compositions cosmétiques.

Nous allons maintenant donner des exemples de l'invention.

### EXEMPLES

### • Charges utilisées

Caractéristiques selon les fiches techniques ou analyses des fournisseurs :
**SIPERNAT® 320 DS :** silice précipitée de diamètre moyen 5 µm (selon ASTM C 690-1992), présentant une surface spécifique de 175 m²/g (ISO 5794-1), une absorption d'huile de 235 g/100 g (DIN 53601) et un pH de 6,3 (5% dans l'eau, ISO 787-9).
**SIPERNAT® 50 S :** silice précipitée de diamètre moyen 7,5 µm (selon ASTM C 690-1992), présentant une surface spécifique de 450 m²/g (ISO 5794-1) et une absorption de 325 g/100 g (DIN 53601).
AEROSIL® **R 972:** silice fumée hydrophobe de pH compris entre 3,6 et 4,4 composée de particules primaires élémentaires de 16 nm qui ont tendance à s'agglomérer en de plus grosses particules et de surface spécifique de 110 m²/g (ISO 5794-1). Cette silice a subi un traitement hydrophobe à l'aide de groupements diméthylsilyle ou triméthylsilyle.
Syloid® **ED5** silice de diamètre moyen 8,4-10,2 µm (Malvern méthode Q013 de la société Grace Davison), sans traitement de surface et de pH compris entre 6,0 et 8,5 (DIN EN ISO 787-9).
Syloid® **ED2** silice de diamètre moyen 3,9-4,7µm (Malvern méthode Q013 de la société Grace Davison), sans traitement de surface et de pH compris entre 6,0 et 8,5 (DIN EN ISO 787-9).
Syloid® **C807** silice de diamètre moyen 6,7-7,9 µm (Malvern méthode Q013 de la société Grace Davison ), sans traitement de surface et de pH compris entre 2,9 et 3,7 (DIN EN ISO 787-9).

### Exemple 1

Dans un réacteur métallique de 5 litres muni d'un agitateur à pales, d'une double enveloppe dans laquelle circule de l'huile de chauffage, d'un système de vidange par le fond, d'un sas d'introduction des réactifs et d'un dispositif de distillation azéotropique sous vide et balayé par un courant d'azote sec, on introduit successivement 2800 ml de solvant White® D25 (coupe d'hydrocarbure fournie par la société Districhimie), 899 g de lauryllactame (lactame 12) sec, 14,4 g de N,N'-éthylènebistéaramide (EBS) et 0,36 g de silice de diamètre moyen 5 µm commercialisée par la société Degussa sous la dénomination SIPERNAT® 320 DS.

Le mélange réactionnel est agité à une vitesse de 550 trs/min puis chauffé progressivement de la température ambiante jusqu'à 110 °C en 30 min. Sous un vide de 2,66 .10⁴ Pa, on distille 290 ml de solvant afin d'entraîner par azéotropie toute trace d'eau. Le réacteur, toujours sous agitation, est ramené à la pression atmosphérique et la température est ramenée à 105°C. On introduit alors 1,44 g d'hydrure de sodium dispersé dans de l'huile à 60 % en poids et l'agitation est reduite à 500 trs/min pendant 30 min.

On injecte en continu 27,6 g d'isocyanate de stéaryle (ICS) pendant 3 h puis on porte le mélange à 110 °C pendant 1 h.

On refroidit à 80 °C le mélange réactionnel qui se présente sous forme d'une bouillie que l'on soutire par le fond du réacteur et qui comprend le solvant, les réactifs de départ qui n'ont pas réagi et la poudre de polyamide 12 formée.

Après essorage et séchage, on obtient une poudre de polyamide 12 constituée de particules sphéroïdales.

### Exemple 2 (comparatif)

On reprend les conditions opératoires de l'exemple 1 mais en remplaçant la silice SIPERNAT® 320 DS par de la silice ultrafine (de diamètre moyen 16 nm) vendue sous la dénomination commerciale AEROSIL® R 972 par la société Degussa.

Après essorage et séchage, on obtient une poudre de polyamide 12 constituée de particules sphéroïdales. Une analyse DSC selon la norme ISO 11357-3 de la poudre obtenue donne les resultats suivants :
- Température de fusion:Tf=177.6°C ;
- enthalpie de fusion ΔH=104 J/g .

### Exemple 3 (comparatif)

On reprend les conditions opératoires de l'exemple 2 mais avec une vitesse d'agitation de 550 trs/min pendant l'injection d'ICS.

Après essorage et séchage, on obtient une poudre de polyamide 12 constituée de particules sphéroïdales.

### Exemple 4

On reprend les conditions opératoires de l'exemple 3 mais en introduisant 0,36 g de silice SIPERNAT® 320 DS dans le milieu réactionnel au lieu de la silice Aerosil®.

Après essorage et séchage, on obtient une poudre de polyamide 12 constituée de particules sphéroïdales.

### Exemple 5

On reprend les conditions opératoires de l'exemple 1 mais en introduisant 0,72 g de silice SIPERNAT® 320 DS dans le milieu réactionnel au lieu de 0,36 g. On reprend les conditions opératoires de l'exemple 1 mais l'injection d'ICS a lieu pendant 160 min avec une vitesse d'agitation de 450 trs/min

Après essorage et séchage, on obtient une poudre de polyamide 12 constituée de particules sphéroïdales.

### Exemple 6

On reprend les conditions opératoires de l'exemple 5 mais en remplaçant la silice SIPERNAT® 320 DS par la silice SIPERNAT® 50S.

Après essorage et séchage, on obtient une poudre de polyamide 12 constituée de particules sphéroïdales.

### Exemple 7 (comparatif)

On reprend les conditions opératoires de l'exemple 2 mais pendant l'injection d'ICS la vitesse d'agitation est de 400 trs/min.

Après essorage et séchage, on obtient une poudre de polyamide 12 constituée de particules sphéroïdales.

### Exemple 8

On reprend les conditions opératoires de l'exemple 7 mais en introduisant 0,36 g de silice SIPERNAT® 320 DS dans le milieu réactionnel au lieu d'Aerosil® R972.

Après essorage et séchage, on obtient une poudre de polyamide 12 constituée de particules sphéroïdales.

### Exemple 9 (comparatif)

On reprend les conditions opératoires de l'exemple 2 mais pendant l'injection d'ICS, l'agitation est 350 trs/min.

Après essorage et séchage, on obtient une poudre de polyamide 12 constituée de particules sphéroïdales. La vitesse d'agitation, bien que diminuée par rapport à l'exemple 2, ne permet pas d'obtenir un diamètre moyen supérieur à 60 µm.

### Exemple 10

On reprend les conditions opératoires de l'exemple 9 mais en introduisant 0,36 g de silice SIPERNAT® 50 S dans le milieu réactionnel au lieu d'Aerosil® R972.

Après essorage et séchage, on obtient une poudre de polyamide 12 constituée de particules sphéroïdales.

### Exemple 11

Dans un réacteur métallique de 5 litres muni d'un agitateur à pales, d'une double enveloppe dans laquelle circule de l'huile de chauffage, d'un système de vidange par le fond, d'un sas d'introduction des réactifs et d'un dispositif de distillation azéotropique sous vide et balayé par un courant d'azote sec, on introduit successivement 2800 ml de solvant White@ D25 (coupe d'hydrocarbure fournie par la société Districhimie), 899 g de lauryllactame (lactame 12) sec, 7,2 g de N,N'-éthylènebistéaramide (EBS) et 0.36 g de silice de diamètre moyen 5 µm commercialisée par la société Degussa sous la dénomination SIPERNAT® 320 DS.

Le mélange réactionnel est agité à une vitesse de 300 trs/min puis chauffé progressivement de la température ambiante jusqu'à 110 °C en 30 min. Sous un vide de 2,66 .10⁴ Pa, on distille 290 ml de solvant afin d'entraîner par azéotropie toute trace d'eau. Le réacteur, toujours sous agitation, est ramené à la pression atmosphérique. On introduit alors 1,44 g d'hydrure de sodium dispersé dans de l'huile à 60 % en poids et l'agitation est augmentée à 400 trs/min. Pendant 60 min., la température est ramenée à 100,4°C. et on continue d'agiter 30min à cette température.

On injecte en continu 28,4 g d'isocyanate de stéaryle melangé avec 124g de solvant White@ D25 pendant 1 h avec un débit de 57,4 g/h et pendant 132 min avec un débit de 43,2 g/h .Puis on porte le mélange à 120 °C pendant 1 h après le début d'injection de l'ICS. A la fin de l'injection, on maintient la température pendant 2h à 120°C.

On refroidit à 80 °C le mélange réactionnel qui se présente sous forme d'une bouillie que l'on soutire par le fond du réacteur et qui comprend le solvant, les réactifs de départ qui n'ont pas réagi et la poudre de polyamide 12 formée.

Après essorage et séchage, on obtient une poudre de polyamide 12 constituée de particules sphéroïdales. Une analyse DSC selon la norme ISO 11357-3 de la poudre obtenue donne les resultats suivants :
- Température de fusion:Tf=183,7°C ;
- enthalpie de fusion ΔH=105 J/g

### Exemple 12 (comparatif)

On reprend les conditions opératoires de l'exemple 11 mais en remplaçant la silice SIPERNAT® 320 DS par de la silice ultrafine (de diamètre moyen 16 nm) vendue sous la dénomination commerciale AEROSIL® R 972 par la société Degussa.

Après essorage et séchage, on obtient une poudre de polyamide 12 constituée de particules sphéroïdales. Une analyse DSC selon la norme ISO 11357-3 de la poudre obtenue donne les resultats suivants :
- Température de fusion:Tf=184,0°C ;
- enthalpie de fusion ΔH=110 J/g

### Exemple 13

Dans un réacteur métallique de 5 litres muni d'un agitateur à pales, d'une double enveloppe dans laquelle circule de l'huile de chauffage, d'un système de vidange par le fond, d'un sas d'introduction des réactifs et d'un dispositif de distillation azéotropique sous vide et balayé par un courant d'azote sec, on introduit successivement 2800 ml de solvant White@ D25 (coupe d'hydrocarbure fournie par la société Districhimie), 899 g de lauryllactame (lactame 12) sec, 14,4 g de N,N'-éthylènebistéaramide (EBS) et 1,44 g de silice de diamètre moyen 4,3 µm commercialisée par la société Grace sous la dénomination SYLOID® ED2.

Le mélange réactionnel est agité à une vitesse de 500 trs/min puis chauffé progressivement de la température ambiante jusqu'à 110 °C en 30 min. Sous un vide de 2,66 .10⁴ Pa, on distille 290 ml de solvant afin d'entraîner par azéotropie toute trace d'eau. Le réacteur, toujours sous agitation, est ramené à la pression atmosphérique et la température est ramenée à 105°C. On introduit alors 1,8 g d'hydrure de sodium dispersé dans de l'huile à 60 % en poids et l'agitation est reduite à 500 trs/min pendant 30 min.

On injecte en continu 27,6 g d'isocyanate de stéaryle pendant 3 h puis on porte le mélange à 110 °C pendant 1 h.

On refroidit à 80 °C le mélange réactionnel qui se présente sous forme d'une bouillie que l'on soutire par le fond du réacteur et qui comprend le solvant, les réactifs de départ qui n'ont pas réagi et la poudre de polyamide 12 formée.

Après essorage et séchage, on obtient une poudre de polyamide 12 constituée de particules sphéroïdales.

### Exemple 14

On reprend les conditions opératoires de l'exemple 13 mais en remplaçant la silice SYLOID® ED2 par 0,72g de la silice SYLOID® ED5 vendue par la société Grace.

Après essorage et séchage, on obtient une poudre de polyamide 12 constituée de particules sphéroïdales.

### Exemple 15

On reprend les conditions opératoires de l'exemple 13 mais en remplaçant la silice SYLOID® ED2 par de la silice SYLOID® C807 vendue par la société Grace.

Après essorage et séchage, on obtient une poudre de polyamide 12 constituée de particules sphéroïdales.

### • Granulométrie des poudres obtenues

L'analyse des poudres obtenues dans les **Exemples 1 à 15** est réalisée à l'aide d'un granulomètre de marque Coulter LS230. Il permet d'obtenir la distribution granulométrique des poudres de laquelle on peut déterminer :
➢ le diamètre moyen.
➢ La largeur de la distribution ou l'écart-type de la distribution.

La distribution granulométrique des poudres selon l'invention est déterminée selon les techniques habituelles à l'aide d'un granulomètre Coulter LS230 de la societé Beckman-Coulter. A partir de la distribution granulométrique, il est possible de déterminer le diamètre moyen en volume avec le mode de calcul logarithmique version 2.11a. du logiciel, ainsi que l'écart-type qui mesure le resserrement de la distribution ou la largeur de la distribution autour du diamètre moyen. C'est l'un des avantages du procédé décrit ici que de permettre d'obtenir une distribution resserrée (écart-type faible) par rapport au diamètre moyen. Cet écart type qui figure dans la dernière colonne du **Tableau I,** est calculé gràce au mode de calcul statistique logarithmique, version 2.11a. du logiciel. Il est compris entre 1,1 et 1,3, voire souvent inférieur à 1,2.

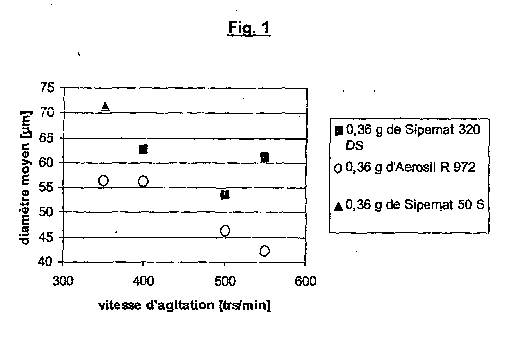

On constate sur la **Figure 1** qu'une charge minérale selon l'invention permet d'obtenir des particules de polyamide 12 de diamètre moyen plus élevé et également de distribution granulométrique plus resserée qu'une charge minérale finement divisée. Cela serait vrai aussi pour le polyamide 6, 6/12 et pour un copolyesteramide.

**TABLEAU I**

| **exemple** | **charge minérale** | **masse de charge minérale introduite** | **vitesse d'agitation** | **diamètre moyen en volume des particules de poudre obtenue** | **Ecart type** |
|---|---|---|---|---|---|
| | | **[g]** | **[*trs*/*min*]** | **[µm]** | |
| 1 | SIPERNAT® 320 DS | 0,36 | 500 | 53,6 | 1,17 |
| 2 (comp.) | AEROSIL® R 972 | 0,36 | 500 | 46,4 | 1,22 |
| 3 (comp.) | AEROSIL® R 972 | 0,36 | 550 | 42,2 | 1,19 |
| 4 | SIPERNAT® 320 DS | 0,36 | 550 | 61,3 | 1,15 |
| 5 | SIPERNAT® 320 DS | 0,72 | 450 | 55,8 | 1,17 |
| 6 | SIPERNAT® 50 S | 0,72 | 450 | 69,4 | 1,18 |
| 7 (comp.) | AEROSIL® R 972 | 0,36 | 400 | 56,2 | 1,18 |
| 8 | SIPERNAT® 320 DS | 0,36 | 400 | 62,7 | 1,17 |
| 9 (comp.) | AEROSIL® R 972 | 0,36 | 350 | 56,5 | 1,23 |
| 10 | SIPERNAT® 50 S | 0,36 | 350 | 71,2 | 1,22 |
| 11 | SIPERNAT® 320 DS | 0,36 | 400 | 47,8 | 1,29 |
| 12 (comp) | AEROSIL® R 972 | 0,36 | 400 | 26,4 | 1,26 |
| 13 | Syloid® ED2 | 1,44 | 500 | 65,1 | 1,18 |
| 14 | Syloid® ED5 | 0,72 | 500 | 70,6 | 1,15 |
| 15 | Syloid® C807 | 1,44 | 500 | 64,3 | 1,19 |

## Revendications

1. Procédé d'obtention de particules de poudre de polyamide ou de copolyesteramide de forme sphéroïdale de diamètre moyen compris entre 40 et 150 µm, par polymérisation anionique d'au moins un monomère polymérisable consistant à introduire dans le milieu réactionnel une silice choisie parmi les silices fabriquées suivant un procédé de précipitation et de diamètre moyen compris entre 1 et 30 µm.

2. Procédé selon la revendication 1, **caractérisé en ce que** les particules de poudre de polyamide ou de copolyesteramide ont un diamètre moyen compris entre 60 et 100 µm.

3. Procédé selon l'une des revendications précédentes, **caractérisé en ce que** le diamètre moyen de la silice est compris entre 2 et 20 µm, de préférence entre 3 à 11 µm.

4. Procédé selon l'une des revendications précédentes, **caractérisé en ce que** le diamètre moyen de la silice est compris entre 4 à 8 µm.

5. Procédé selon l'une des revendications précédentes, **caractérisé en ce que** le rapport pondéral de la silice par rapport à le ou les monomère(s) polymérisable(s) est compris entre 10 et 50 000 ppm, de préférence entre 100 et 20 000 ppm, et avantageusement entre 100 et 15 000 ppm.

6. Procédé selon l'une des revendications précédentes, **caractérisé en ce que** le ou les monomères polymérisable(s) est ou sont choisis parmi le lauryl lactame, le caprolactame, l'oenantholactame et le capryllactame.

7. Procédé selon l'une des revendications précédentes, **caractérisé en ce que** les particules de polyamide sont en polyamide 12, en polyamide 6 ou en polyamide 6/12.

8. Procédé selon l'une des revendications précédentes, **caractérisé en ce que** l'on polymérise un mélange comprenant en % molaire, le total faisant 100% :
• de 1 à 98% d'un lactame choisi parmi le lauryl lactame, le caprolactame, l'oenantholactame et le capryllactame ;
• de 1 à 98% d'un lactame différent du précédent choisi parmi le lauryl lactame, le caprolactame, l'oenantholactame et le capryllactame;
• de 1 à 98% d'une lactone choisi parmi la caprolactone, la valérolactone et la butyrolactone.

9. Procédé selon l'une des revendications précédentes, **caractérisé en ce que** l'on ajoute au milieu réactionnel au moins une N,N'-alkylène bis amide.

10. Procédé selon l'une des revendications précédentes, **caractérisé en ce que** l'on utilise comme solvant, une coupe d'hydrocarbures paraffiniques dont la plage d'ébullition est comprise entre 120 et 170°C, de préférence entre 140 et 170°C.

11. Poudre de polyamide susceptible d'être obtenue selon l'une des revendications précédentes.

12. Poudre de copolyesteramide suceptible d'être obtenue selon l'une des revendications 1 à 10.

13. Utilisation d'une poudre selon l'une des revendications 11 et 12 pour fabriquer : des revêtements, des compositions d'encre, des compositions de peintures, des compositions cosmétiques, des compositions pharmaceutiques, des alliages avec des poudres métalliques, des alliages avec des poudres d'oxydes métalliques ou des articles par agglomération de la dite poudre par fusion provoquée par un faisceau laser (laser sintering), un rayonnement IR ou un rayonnement UV.

14. Utilisation selon la revendication 13 pour fabriquer: un revêtement de substrat métallique, tel qu'un revêtement de tôle d'acier ou d'aluminium, ou un revêtement de substrat plastique.

15. Utilisation selon la revendication 13 pour fabriquer un plasto-aimant.

## Patentansprüche

1. Verfahren zur Herstellung von Polyamid- oder Copolyesteramidpulverteilchen mit sphäroidischer Form und einem mittleren Durchmesser zwischen 40 und 150 µm durch anionische Polymerisation mindestens eines polymerisierbaren Monomers, bei dem man in das Reaktionsmedium eine aus den nach einem Fällungsverfahren hergestellten Kieselsäuren ausgewählte Kieselsäure mit einem mittleren Durchmesser zwischen 1 und 30 µm einträgt.

2. Verfahren nach Anspruch 1, **dadurch gekennzeichnet, dass** die Polyamid- oder Copolyesteramidpulverteilchen einen mittleren Durchmesser zwischen 60 und 100 µm aufweisen.

3. Verfahren nach einem der vorhergehenden Ansprüche, **dadurch gekennzeichnet, dass** der mittlere Durchmesser der Kieselsäure zwischen 2 und 20 µm und vorzugsweise zwischen 3 und 11 µm liegt.

4. Verfahren nach einem der vorhergehenden Ansprüche, dadurch gekennzeicnnet, dass der mittlere Durchmesser der Kieselsäure zwischen 4 und 8 µm liegt.

5. Verfahren nach einem der vorhergehenden Ansprüche, **dadurch gekennzeichnet, dass** das Gewichtsverhältnis von Kieselsäure zu dem polymerisierbaren Monomer bzw. den polymerisierbaren Monomeren zwischen 10 und 50.000 ppm, vorzugsweise zwischen 100 und 20.000 ppm und vorteilhafterweise zwischen 100 und 15.000 ppm liegt.

6. Verfahren nach einem der vorhergehenden Ansprüche, **dadurch gekennzeichnet, dass** man das polymerisierbare Monomer bzw. die polymerisierbaren Monomere aus Lauryllactam, Caprolactam, Önantholactam und Capryllactam auswählt.

7. Verfahren nach einem der vorhergehenden Ansprüche, **dadurch gekennzeichnet, dass** die Polyamidteilchen aus Polyamid 12, Polyamid 6 oder Polyamid 6/12 bestehen.

8. Verfahren nach einem der vorhergehenden Ansprüche, **dadurch gekennzeichnet, dass** man eine Mischung polymerisiert, die Folgendes in Mol-% umfasst, wobei sich die Summe auf 100% beläuft:
• 1 bis 98% eines aus Lauryllactam, Caprolactam, Önantholactam und Capryllactam ausgewählten Lactams;
• 1 bis 98% eines aus Lauryllactam, Caprolactam, Önantholactam und Capryllactam ausgewählten Lactams, das von dem obigen verschieden ist;
• 1 bis 98% eines aus Caprolacton, Valerolacton und Butyrolacton ausgewählten Lactons.

9. Verfahren nach einem der vorhergehenden Ansprüche, **dadurch gekennzeichnet, dass** man mindestens ein N,N'-Alkylenbisamid zu dem Reaktionsmedium gibt.

10. Verfahren nach einem der vorhergehenden Ansprüche, **dadurch gekennzeichnet, dass** man als Lösungsmittel einen Schnitt paraffinischer Kohlenwasserstoffe, deren Siedebereich zwischen 120 und 170°C und vorzugsweise zwischen 140 und 170°C liegt, verwendet.

11. Polyamidpulver, das nach einem der vorhergehenden Ansprüche erhältlich ist.

12. Copolyesteramidpulver, das nach einem der Ansprüche 1 bis 10 erhältlich ist.

13. Verwendung eines Pulvers nach einem der Ansprüche 11 und 12 zur Herstellung von Beschichtungen, Tintenzusammensetzungen, Anstrichmittelzusammensetzungen, kosmetischen Zusammensetzungen, pharmazeutischen Zusammensetzungen, Legierungen mit Metalipulvern, Legierungen mit Metalloxidpulvern oder Gegenständen durch Agglomeration des Pulvers durch Schmelzen mit Hilfe eines Laserstrahls (Laser-Sintern), von IR-Strahlung oder von UV-Strahlung.

14. Verwendung nach Anspruch 13 zur Herstellung einer Metallsubstratbeschichtung, wie einer Stahl- oder Aluminiumblechbeschichtung, oder einer Kunststoffsubstratbeschichtung.

15. Verwendung nach Anspruch 13 zur Herstellung eines Kunststoffmagneten.

## Claims

1. Process for the production of polyamide or copolyesteramide powder particles having a spheroidal shape and a mean diameter of between 40 and 150 µm by anionic polymerization of at least one polymerizable monomer which consists in introducing, into the reaction medium, silica chosen from the silicas manufactured according to a precipitation process and having a mean diameter of between 1 and 30 µm.

2. Process according to Claim 1, **characterized in that** the polyamide or copolyesteramide powder particles have a mean diameter of between 60 and 100 µm.

3. Process according to either of the preceding claims, **characterized in that** the mean diameter of the silica is between 2 and 20 µm, preferably between 3 and 11 µm.

4. Process according to one of the preceding claims, **characterized in that** the mean diameter of the silica is between 4 and 8 µm.

5. Process according to one of the preceding claims, **characterized in that** the ratio by weight of the silica with respect to the polymerizable monomer or monomers is between 10 and 50 000 ppm, preferably between 100 and 20 000 ppm and advantageously between 100 and 15 000 ppm.

6. Process according to one of the preceding claims, **characterized in that** the polymerizable monomer or monomers is or are chosen from lauryllactam, caprolactam, enantholactam and capryllactam.

7. Process according to one of the preceding claims, **characterized in that** the polymer particles are made of polyamide 12, polyamide 6 or polyamide 6/12.

8. Process according to one of the preceding claims, **characterized in that** a mixture comprising, in molar %, the total being 100%:
• from 1 to 98% of a lactam chosen from lauryllactam, caprolactam, enantholactam and capryllactam;
• from 1 to 98% of a lactam, other than the above, chosen from lauryllactam, caprolactam, enantholactam and capryllactam;
• from 1 to 98% of a lactone chosen from caprolactone, valerolactone and butyrolactone,
is polymerized.

9. Process according to one of the preceding claims, **characterized in that** at least one N,N'-alkylenebisamide is added to the reaction medium.

10. Process according to one of the preceding claims, **characterized in that** use is made, as solvent, of a paraffinic hydrocarbon fraction, the boiling range of which is between 120 and 170°C, preferably between 140 and 170°C.

11. Polyamide powder capable of being obtained according to one of the preceding claims.

12. Copolyesteramide powder capable of being obtained according to one of Claims 1 to 10.

13. Use of a powder according to either of Claims 11 and 12 for manufacturing: coatings, ink compositions, paint compositions, cosmetic compositions, pharmaceutical compositions, alloys with metal powders, alloys with metal oxide powders or articles by agglomeration of said powder by melting brought about by a laser beam (laser sintering), IR radiation or UV radiation.

14. Use according to Claim 13 for manufacturing: a coating for a metal substrate, such as a coating for a stainless steel or alominum sheet, or a coating for a plastic substrate.

15. Use according to Claim 13 for manufacturing a plastic magnet.
